# EUROPEAN PATENT APPLICATION

(11) **EP 4 675 832 A1**
(43) Date of publication of application: **07.01.2026**
(21) Application number: 23925448.5
(22) Date of filing: 28.12.2023
(51) Int. Cl.: H01M 50/526, H01M 50/503, H01M 50/505, H01M 50/522, H01M 50/524, H01M 50/588, H01M 50/591, H01M 50/548

(54) **BUS BAR AND METHOD FOR PRODUCING SAME, AND ELECTRIC POWER STORAGE DEVICE**

(30) Priority: 28.02.2023 JP 2023030456
(71) Applicant: IBIDEN CO., LTD., Ogaki-shi, Gifu 503-8604 (JP)
(72) Inventor: KAWASAKI, Hironori, Ibi-gun, Gifu 501-0695 (JP); GOTO, Shinnosuke, Ibi-gun, Gifu 501-0695 (JP)
(74) Representative: Hoffmann Eitle
(86) International application number: PCT/JP2023/047224
(87) International publication number: WO 2024/180898

(57) **Abstract**

To provide a bus bar capable of stably ensuring an insulation property, a method for producing a bus bar, and a power storage device. A bus bar (1) for use in a power storage device including a battery cell includes a bus bar body (5) containing a conductive material and covered with an insulating film (10). A corner portion (7) of the bus bar body (5) is subjected to R processing. A method for producing the bus bar (1) includes a step of performing R processing on the corner portion of the bus bar body (5) containing a conductive material, and a step of applying an insulating coating material to the bus bar body (5) and then curing the insulating coating material to form the insulating film (10). A power storage device includes a plurality of battery cells or battery modules connected to each other by the bus bar.

## Description

### TECHNICAL FIELD

The present invention relates to a bus bar, a method for producing the same, and a power storage device in which a plurality of battery cells or battery modules are connected to each other by the bus bar.

### BACKGROUND ART

Various electronic devices, electric vehicles or hybrid vehicles driven by an electric motor, storage batteries, and the like are mounted with a power storage device in which a plurality of battery cells are connected in series or in parallel by a bus bar. In addition, a lithium ion secondary battery, which has higher capacity and is capable of higher output than a lead-acid battery, a nickel-metal hydride battery, or the like, is mainly used for the battery cells.

Since the bus bar is required to have an insulation property, in Patent Literature 1, a coating film composed of a resin such as an epoxy, an epoxy polyester, or a polyester is formed on a bus bar body such as a metal plate.

However, in the battery cell, an overcurrent is applied during charging and discharging, and the bus bar may generate heat, and in some cases, a flame may be generated. In such an abnormal state, a coating film made of a resin as in Patent Literature 1 does not have sufficient heat resistance. Therefore, in Patent Literature 2, a bus bar body is covered with a mica sheet having an electrical insulation property and heat resistance.

### CITATION LIST

### PATENT LITERATURE

Patent Literature 1: JP2021-48001A
Patent Literature 2: JP2020-528650A

### SUMMARY OF INVENTION

### TECHNICAL PROBLEM

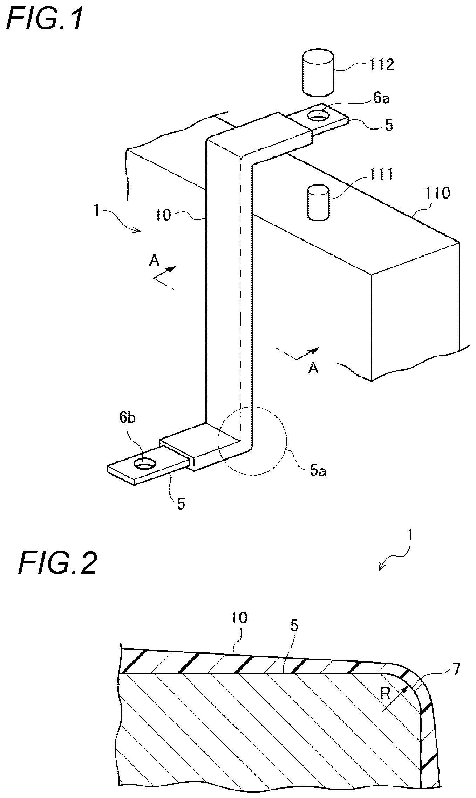

In Patent Literature 1, fluidized bed coating (fluidized bed powder coating) is performed when forming the coating film. The bus bar body is a member obtained by punching a metal plate into a predetermined shape, and a cross-sectional shape of a portion continuous from front and back surfaces to an end surface (a thick portion) of the metal plate, that is, a corner portion (see a corner portion 7 in Fig. 2 in the present application) is substantially a right angle. Therefore, in the case of forming a coating film by the fluidized bed coating as in Patent Literature 1, the coating film is thin on the corner portion of the bus bar body, which is likely to cause an insulation failure.

In addition, in Patent Literature 2, it is necessary to wind the mica sheet around the bus bar body. The bus bar may have a complicated shape due to a spatial limitation of an installation location of the battery cell, and when the bus bar has a complicated shape, it is difficult to wind the mica sheet around every corner of the bus bar body. When the mica sheet has winding unevenness or a gap, no sufficient electrical insulation property can be obtained. Further, an adhesive surface of the mica sheet may be peeled off at a high temperature.

Therefore, an object of the present invention is to provide a bus bar capable of stably ensuring an insulation property. Another object of the present invention is to provide a method for producing a bus bar that does not require a winding operation such as that for a mica sheet, that does not cause winding unevenness or a gap between sheets, that does not have a problem of sheet peeling off, that can even easily cope with a complicated shape, and that is also easy for production. Still another object of the present invention is to provide a power storage device in which a plurality of battery cells or battery modules are connected to each other by such a bus bar to exhibit high safety even in an abnormal state.

### SOLUTION TO PROBLEM

The above object of the present invention is achieved by the following configuration [1] relating to a bus bar.
[1] A bus bar for use in a power storage device including a battery cell, the bus bar including:
   a bus bar body containing a conductive material; and
   an insulating film covering the bus bar body, in which
   a corner portion of the bus bar body is subjected to R processing.
      In addition, preferred embodiments of the present invention relating to the bus bar relate to the following [2] to [12].
[2] The bus bar according to [1], in which a radius of curvature (R) of the R processing at the corner portion is 500 µm or more.
[3] The bus bar according to [2], in which the insulating film contains a filler.
[4] The bus bar according to [3], in which the filler includes an inorganic compound.
[5] The bus bar according to [4], in which the inorganic compound includes a silicate compound.
[6] The bus bar according to [5], in which the silicate compound is at least one kind selected from a glass-based material, mica, kaolin, talc, clay, pyrophyllite, montmorillonite, bentonite, wollastonite, xonotlite, zeolite, diatomaceous earth, and halloysite.
[7] The bus bar according to [6], in which the glass-based material is at least one kind selected from a flaky glass, a glass particle, a glass fiber, and a glass bead.
[8] The bus bar according to [6], in which the silicate compound includes at least one of a glass-based material and mica, and the glass-based material is a flaky glass.
[9] The bus bar according to any one of [3] to [8], in which a content of the filler with respect to all components in the insulating film is 3 vol% to 70 vol%.
[10] The bus bar according to any one of [1] to [8], in which the insulating film has a minimum film thickness of 300 µm or more.
[11] The bus bar according to any one of [1] to [8], in which the insulating film contains a silicone-based material.
[12] The bus bar according to any one of [1] to [8], in which the insulating film contains a silicone resin and a thixotropic agent.
   In addition, the above object of the present invention is achieved by the following configuration [13] relating to a method for producing a bus bar.
[13] A method for producing a bus bar for use in a power storage device including a battery cell, the method including:
   a step of performing R processing on a corner portion of a bus bar body containing a conductive material; and
   a step of applying an insulating coating material to the bus bar body and then drying the insulating coating material to form an insulating film.
      In addition, preferred embodiments of the present invention relating to the method for producing a bus bar relate to the following [14] to [25].
[14] The method for producing a bus bar according to [13], in which the insulating coating material is applied to the bus bar body using at least one coating method selected from spray coating, powder coating, and dip coating.
[15] The method for producing a bus bar according to [13], in which a radius of curvature (R) of R processing at the corner portion is 500 µm or more.
[16] The method for producing a bus bar according to [15], in which the insulating coating material contains a filler.
[17] The method for producing a bus bar according to [16], in which the filler includes an inorganic compound.
[18] The method for producing a bus bar according to [17], in which the inorganic compound includes a silicate compound.
[19] The method for producing a bus bar according to [18], in which the silicate compound is at least one kind selected from a glass-based material, mica, kaolin, talc, clay, pyrophyllite, montmorillonite, bentonite, wollastonite, xonotlite, zeolite, diatomaceous earth, and halloysite.
[20] The method for producing a bus bar according to [19], in which the glass-based material is at least one kind selected from a flaky glass, a glass particle, a glass fiber, and a glass bead.
[21] The method for producing a bus bar according to [19], in which the silicate compound includes at least one of a glass-based material and mica, and the glass-based material is a flaky glass.
[22] The method for producing a bus bar according to any one of [16] to [21], in which a content of the filler with respect to all solid components in the insulating coating material is 3 vol% to 70 vol%.
[23] The method for producing a bus bar according to any one of [13] to [21], in which the insulating coating material is applied to the bus bar body such that the insulating coating material has a minimum film thickness of 300 µm or more.
[24] The method for producing a bus bar according to any one of [13] to [21], in which the insulating coating material contains a silicone-based material.
[25] The method for producing a bus bar according to any one of [13] to [21], in which the insulating coating material contains a silicone resin and a thixotropic agent.
   In addition, the above object of the present invention is achieved by the following configuration [26] relating to a power storage device.
[26] A power storage device including:
   a plurality of battery cells or battery modules connected to each other by the bus bar according to any one of [1] to [12].

### ADVANTAGEOUS EFFECTS OF INVENTION

In the bus bar according to the present invention, the bus bar body whose corner portion is subjected to R processing is covered with the insulating film, and a sufficiently thick insulating film is also formed on the corner portion of the bus bar body, so that an insulation failure is less likely to occur.

In addition, in the method for producing a bus bar according to the present invention, since the insulating coating material can be formed using a simple coating method, the production step is simple. In addition, regardless of a shape of the bus bar body, there is no gap, and a thick insulating film can be formed on the corner portion of the bus bar body.

Further, in the power storage device according to the present invention, since a plurality of battery cells or battery modules are connected to each other by such a bus bar, an insulation failure is less likely to occur, and high safety is exhibited even in an abnormal state.

### BRIEF DESCRIPTION OF DRAWINGS

[Fig. 1] Fig. 1 is an exploded perspective view showing a state where an example of a bus bar according to the present invention is mounted to a battery cell.
[Fig. 2] Fig. 2 is a cross-sectional view showing the bus bar according to the embodiment taken along a line A-A in Fig. 1, and is a schematic diagram showing a periphery of a corner portion of the bus bar body in an enlarged manner.
[Fig. 3] Fig. 3 is a perspective view illustrating a method of measuring a minimum film thickness and a maximum film thickness of an insulating film.
[Fig. 4] Fig. 4 is a cross-sectional view showing an example of a power storage device according to the present invention.
[Fig. 5] Fig. 5 is a graph showing results of measuring a film thickness of an insulating film in Examples and Comparative Examples.

### DESCRIPTION OF EMBODIMENTS

Hereinafter, an embodiment of the present invention will be described in detail with reference to the drawings. Note that, the present invention is not limited to the embodiment described below, and can be freely changed and implemented without departing from the gist of the present invention.

### [Bus Bar]

Fig. 1 is an exploded perspective view showing a state where a bus bar 1 according to the present embodiment is mounted to a battery cell 110. As shown in Fig. 1, a bus bar body 5 made of a conductive material is, for example, a metal plate member having a Z-shape as a whole, and is to be fixed by inserting an electrode 111 of the battery cell 110 into a connection hole 6a at one tip and covering the electrode 111 with a terminal cap 112. Adjacent battery cells (not shown) or external devices (not shown) are connected to a connection hole 6b at the other tip of the bus bar body 5. A portion excluding the connection holes 6a and 6b (surface) of the bus bar body 5 is covered with an insulating film 10, which is to be described later, thereby forming the bus bar 1.

Note that, although not shown, the bus bar body 5 may have various shapes depending on an installation location of the battery cell 110, such as an I-shape as a whole or an irregular shape having a curved portion.

When the bus bar body 5 has a shape having a bent portion 5a such as a Z-shape shown in Fig. 1 or a curved portion (not shown), in a method of winding a mica sheet as in the bus bar in Patent Literature 2, it is assumed that a winding operation takes time and effort to prevent the winding unevenness or the gap from occurring in the bent portion 5a or the curved portion, the gap is generated due to a vibration or the like, or an adhesive is peeled off. However, as to be described later, in the present embodiment, since the insulating film 10 can be formed using at least one coating method selected from spray coating, powder coating, and dip coating, such a problem does not occur. Among these coating methods, particularly "dip coating" has an advantage that the step is simple. Note that, in the present description, the insulating film obtained by at least one coating method selected from spray coating, powder coating, and dip coating can also be referred to as an "insulating coating film".

Fig. 2 is a cross-sectional view taken along line A-A in Fig. 1, and is a schematic diagram showing a periphery of a corner portion 7 of the bus bar body 5 in an enlarged manner. As shown in the drawing, the corner portion 7 of the bus bar body 5 is subjected to R processing. That is, the corner portion 7 of the bus bar body 5 has an R portion. In the bus bar 1 according to the present invention, when forming the insulating film 10, for example, at least one coating method selected from spray coating, powder coating, and dip coating can be used, but in these coating methods, there is a problem that the film is thin when the corner portion 7 of the bus bar body 5 has a right-angled cross section. Therefore, the corner portion 7 of the bus bar body 5 is subjected to R processing, whereby the film on the corner portion 7 can be thickened. Specifically, a film thickness of the insulating film 10 on the corner portion 7 of the bus bar body 5 is preferably 300 µm or more.

Note that, as shown in the drawing, the insulating film 10 is thin on the corner portion 7 of the bus bar body 5 and is gradually thick so as to have a film thickness to be described later. However, in the present embodiment, since the film thickness on the corner portion 7 can be increased, a difference between the film thickness on the corner portion and a maximum film thickness can be reduced.

A radius of curvature (R) in the R processing is preferably as large as possible, and when the radius of curvature (R) in the R portion is 500 µm or more, the insulating film 10 having a sufficient thickness of 300 µm or more can be formed on the corner portion 7 of the bus bar body 5. More preferably, the radius of curvature (R) of the R portion is 600 µm or more (R ≥ 600 µm).

The insulating film 10 preferably has an insulation property, more preferably has heat resistance or fire resistance that can withstand heat generation or a flame from the battery cell 110 in an abnormal state, and specifically preferably has a composition shown below.

Note that, the insulating film 10 preferably contains a filler since the heat resistance can be improved. Since an inorganic compound has a high melting point and more excellent heat resistance, the insulating film 10 more preferably contains an inorganic compound as the filler, and among these, more preferably contains a silicate compound. In this manner, by selecting a material of the insulating film 10 and imparting the heat resistance or the fire resistance to the insulating film 10, it is possible to protect the bus bar from a high temperature or a flame from a battery cell that has experienced thermal runaway, and to prevent a chain reaction of the thermal runaway to adjacent battery cells via the bus bar 1.

The silicate compound is preferably at least one kind selected from a glass-based material, mica, kaolin, talc, clay, pyrophyllite, montmorillonite, bentonite, wollastonite, xonotlite, zeolite, diatomaceous earth, and halloysite.

In addition, the glass-based material is preferably at least one kind selected from a flaky glass, a glass particle, a glass fiber, and a glass bead.

Among these fillers, mica or a flaky glass is oriented in a plane in the film and exhibits an excellent insulation property and heat resistance. Therefore, in the case where the filler according to the present embodiment contains a silicate compound, it is particularly preferable that the silicate compound includes at least one of a glass-based material and mica, and the glass-based material includes a flaky glass.

A content of the filler with respect to all components in the insulating film 10 is preferably 3 vol% to 70 vol%. When the content of the filler is less than 3 vol%, there is a concern that no sufficient insulation property and heat resistance can be obtained. As to be described later, the insulating film 10 can be formed using at least one coating method selected from spray coating, powder coating, and dip coating, but when the content of the filler is more than 70 vol%, a viscosity of the insulating coating material is too high, and film formability is deteriorated.

In addition, the insulating film 10 preferably contains a silicone-based material as a binder because of its excellent incombustibility and heat resistance. Examples of the silicone-based material include a silicone resin, and the film thickness of the insulating film 10 can be easily controlled by using a thixotropic agent in combination as a thickener.

Note that, in addition to the filler and the silicone-based material described above, the insulating film 10 may contain other materials such as a flame retardant, a dispersant, and a pigment as long as the insulation property and the heat resistance are not influenced.

A minimum film thickness of the insulating film 10 is preferably 300 µm or more. When the minimum film thickness including the corner portion 7 is less than 300 µm, there is a concern that no sufficient insulation property and heat resistance can be obtained, and the minimum film thickness is more preferably 400 µm or more, and still more preferably 500 µm or more. Note that, as for an upper limit of the film thickness, even when the film thickness is increased more than necessary, further improvement of the insulation property and the heat resistance cannot be expected, and a defect in film quality such as cracks of the insulating film 10 is rather observed. Therefore, a maximum film thickness of the insulating film 10 is preferably 2,000 µm or less, more preferably 1,500 µm or less, and still more preferably 1,000 µm or less.

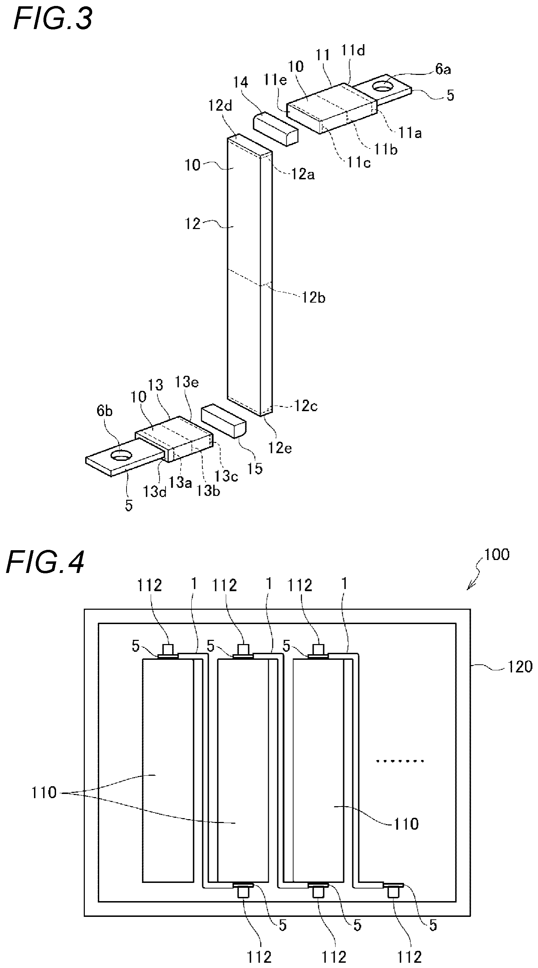

Here, a method of measuring the minimum film thickness and the maximum film thickness of the insulating film 10 in the bus bar 1 according to the present embodiment will be specifically described with reference to Fig. 3. Note that, Fig. 3 is a diagram in which all bent portions of the bus bar 1 shown in Fig. 1 are cut along two surfaces constituting an inner angle side and the bus bar 1 is divided into plate-shaped bodies 11, 12, and 13 and bent bodies 14 and 15. Since it is difficult to measure the film thickness of the insulating film 10 in the entire region formed on a surface of the bus bar body 5, in the present embodiment, the film thickness is measured by the following measurement method. Note that, the bent bodies 14 and 15 cut off when the bus bar 1 is cut along the two surfaces constituting the inner angle side are ignored in this measurement method.

For example, the plate-shaped body 12 is cut at three locations, i.e., film thickness measurement lines 12a, 12b, and 12c along a direction orthogonal to a longitudinal direction thereof. The positions of the film thickness measurement line 12a and the film thickness measurement line 12c are set to positions 1 mm inward from end surfaces 12d and 12e in the longitudinal direction of the plate-shaped body 12, respectively. In addition, the position of the film thickness measurement line 12b is set to a central position between the film thickness measurement line 12a and the film thickness measurement line 12c.

The plate-shaped body 11 is cut at three locations, i.e., film thickness measurement lines 11a, 11b, and 11c in a direction same as the cutting direction of the plate-shaped body 12. Note that, the connection hole 6a is provided at one end portion of the plate-shaped body 11, and there is a possibility that the film thickness of the insulating film 10 is not stable near an end surface 11d on a connection hole 6a side. Therefore, the position of the film thickness measurement line 11a is set to a position 5 mm inward from the end surface 11d in the insulating film 10. In addition, the position of the film thickness measurement line 11c is set to a position 1 mm inward from the other end surface 11e of the plate-shaped body 11, and the position of the film thickness measurement line 11b is set to a central position between the film thickness measurement line 11a and the film thickness measurement line 11c.

Similar to the plate-shaped body 11, since the connection hole 6b is provided at one end portion of the plate-shaped body 13, the position of a film thickness measurement line 13a is set to a position 5 mm inward from an end surface 13d in the insulating film 10. In addition, the position of a film thickness measurement line 13c is set to a position 1 mm inward from the other end surface 13e of the plate-shaped body 13, and the position of a film thickness measurement line 13b is set to a central position between the film thickness measurement line 13a and the film thickness measurement line 13c.

As described above, the three plate-shaped bodies 11, 12, and 13 are cut along the film thickness measurement lines 11a to 11c, 12a to 12c, and 13a to 13c, respectively, and a total of nine cut surfaces are photographed. Then, image processing is performed on each photograph, and a distance from the surface of the bus bar body 5 to a surface of the insulating film 10 is measured, and the smallest film thickness is defined as the minimum film thickness, and the largest film thickness is defined as the maximum film thickness.

The cross-sectional view shown in Fig. 2 is an example of a cut surface cut along a film thickness measurement line using the above measurement method. The film thickness of the insulating film 10 on the corner portion 7 of the bus bar body 5 can also be measured on a film thickness measurement line described in the above film thickness measurement method. Specifically, in the bus bar body 5, extension lines are respectively drawn with respect to two planes constituting the corner portion 7, and a bisector of an angle formed by the two extension lines is set as a corner portion measurement line. Then, in the corner portion measurement line, a distance from the surface of the bus bar body 5 to the surface of an insulating coating 10 is defined as a "film thickness of the insulating coating film on the corner portion".

In the present embodiment, since the corner portion 7 is subjected to R processing, the thickness of the insulating film 10 on the corner portion 7 can be sufficiently ensured without increasing the maximum film thickness. Specifically, in a related-art bus bar in which a corner portion is not subjected to R processing, a film thickness of an insulating film on the corner portion is less than 0.15 times a maximum film thickness, but according to the present embodiment, the film thickness of the insulating film on the corner portion can be 0.15 times or more the maximum film thickness. Note that, when the radius of curvature (R) of the R processing at the corner portion is 500 µm or more, the film thickness of the insulating film on the corner portion can be 0.20 times or more the maximum film thickness.

Note that, although not shown, in the case where the bus bar has a shape having a curved portion, it is preferable that a curved body cut off when the bus bar is cut into plate-shaped bodies is also cut at a position 1 mm inward from end surfaces and at a central position thereof in the same manner as the above method, and the film thickness is measured.

### [Method for Producing Bus Bar]

### (R Processing)

In order to produce the bus bar 1, first, the corner portion 7 of the bus bar body 5 is subjected to R processing. At this time, as described above, the radius of curvature (R) is preferably 500 µm or more. The processing method is not limited, and milling, turning, or the like can be performed.

### (Formation of Insulating Film)

Next, the insulating film 10 is formed on the surface of the bus bar body 5 by, for example, "dip coating". For example, a predetermined amount of a filler is added to a silicone resin and sufficiently mixed to prepare an insulating coating material. Then, peripheries of the connection holes 6a and 6b (see Fig. 1) of the bus bar body 5 are masked, the bus bar body 5 is immersed in and pulled up from the insulating coating material, and then the insulating coating material is dried to form an insulating film.

In the present embodiment, the method of applying the insulating coating material to the surface of the bus bar body 5 is not particularly limited, and at least one coating method selected from spray coating, powder coating, and dip coating can be used. Even in the case where any one of these coating methods is used, the insulating film 10 having a sufficient film thickness can be easily formed on the corner portion.

As for an amount of the insulating coating material to be applied, it is preferable to appropriately adjust a pulling up speed, a drying temperature, and the like such that the minimum film thickness after drying (that is, the minimum film thickness of the insulating film 10) is preferably 300 µm or more, more preferably 400 µm or more, and still more preferably 500 µm or more.

In addition, a content of the filler with respect to all solid components in the insulating coating material is preferably 3 vol% to 70 vol%, more preferably 10 vol% to 60 vol%, and still more preferably 20 vol% to 50 vol%. As described above, when the content of the filler is less than 3 vol%, there is a concern that no sufficient insulation property and heat resistance can be obtained. On the other hand, when the content of the filler is more than 70 vol%, the viscosity of the heat-resistant insulating coating material is too high, and there is a possibility that the film formability decreases.

In the method of winding the mica sheet as in Patent Literature 2, a winding operation is required, and in particular, the winding operation takes time and effort to prevent the winding unevenness or the gap from occurring in the bent portion 5a or the curved portion. In addition, it is assumed that the gap is generated due to a vibration or the like, or the adhesive is peeled off. However, in the present invention, since the insulating film 10 can be formed using at least one coating method selected from spray coating, powder coating, and dip coating, such a problem does not occur. Among these coating methods, particularly "dip coating" has an advantage that the step is simple.

In addition, the insulating film 10 does not have a wound portion like a mica sheet, and the insulation property does not decrease.

### [Power Storage Device]

As shown in Fig. 4, a power storage device 100 includes a plurality of battery cells 110 housed in a battery case 120. The adjacent battery cell 110 and battery cell 110 are connected to each other by the bus bar 1.

Since the bus bar 1 is covered with the insulating film 10 and the corner portion 7 is also covered with the insulating film 10 having a sufficient thickness, the insulation property can be sufficiently ensured, and the bus bar 1 can be protected even when a certain battery cell 110 experiences thermal runaway.

Therefore, in the power storage device according to the present embodiment, since the plurality of battery cells 110 or battery modules (not shown) are connected to each other by the bus bar 1, high safety is exhibited even in an abnormal state.

### Examples

Hereinafter, the present invention will be further clarified with reference to Examples and Comparative Examples. Specifically, a test piece in which an insulating film was formed after a corner portion was subjected to R processing and a test piece in which an insulating film was formed without being subjected to R processing were prepared, and film thicknesses of the insulating films formed on the corner portions were compared.

### (Example 1)

A corner portion of an aluminum plate having a length of 150 mm and a width of 30 mm and a thickness of 2 mm, which was regarded as a bus bar body, was subjected to R processing with a radius of curvature R = 900 µm. Then, the aluminum plate subjected to the R processing was immersed in an insulating coating material containing mica particles in an amount of 27 vol% with respect to a total volume of the insulating coating material and containing a silicone resin, and was pulled up, and then the coating material was dried to form an insulating film, thereby preparing a test piece. At this time, an application amount was changed by changing pulling up conditions, and the film thickness of the insulating film after drying was adjusted.

### (Example 2)

A test piece was prepared in the same manner as in Example except that a copper plate was used instead of the aluminum plate, and the corner portion was subjected to R processing with a radius of curvature R = 600 µm.

### (Comparative Example 1)

A test piece was prepared using the same aluminum plate in the same manner as in Example 1 except that the aluminum plate was not subjecting the corner portion to R processing.

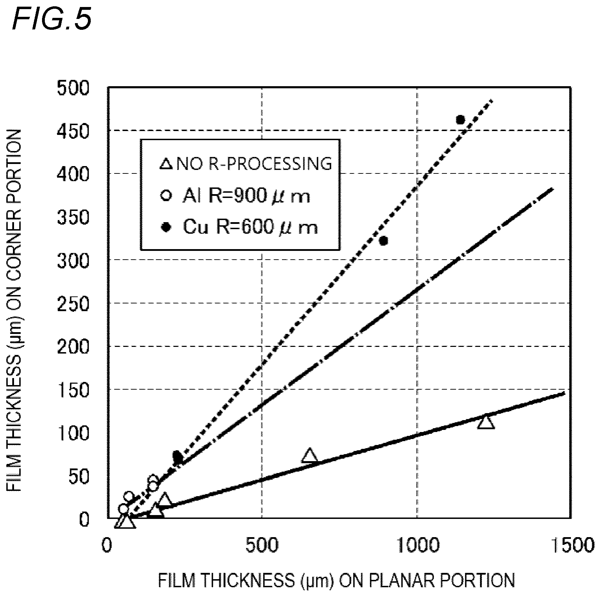

Then, for each of the prepared test pieces, a central portion of a pair of sides was cut along the pair of sides, the cut surface was photographed and subjected to image processing, the largest film thickness of the insulating film in the image was measured, and the film thicknesses of the insulating film on four corner portions were measured. Fig. 5 is a graph showing the measurement results. Note that, the "film thickness on planar portion" in Fig. 5 represents the maximum value of the film thickness of the insulating film in the image captured by the above method, and is regarded as the maximum film thickness of the insulating film formed on the test piece in the corresponding example. In addition, the "film thickness on corner portion" represents the minimum value of the insulating film on the four corner portions in the image captured by the above method, and is regarded as the minimum film thickness of the insulating film formed on the test piece in the corresponding example.

As shown in Fig. 5, in each test piece, the film thickness on the corner portion increases as the film thickness on the planar portion coating increases.

However, in the test piece in Comparative Example 1 in which the corner portion is not subjected to R processing, no insulating film is formed on the corner portion even when the film thickness on the planar portion is 62 µm. In contrast, in the test piece in Example 1 in which the corner portion is subjected to R processing, an insulating film having an angle of about 11 µm is formed even when the film thickness on the planar portion is 58 µm. In the test piece in Comparative Example 1, in order to set the film thickness on the corner portion to 10 µm, it is necessary to increase the film thickness on the planar portion to around 110 µm. In addition, in comparison between Comparative Example 1 and Example 2, in the test piece in Comparative Example 1, when the film thickness on the planar portion is 1,229 µm, the film thickness on the corner portion is only 114 µm. On the other hand, in the test piece in Example 2, in the case where the film thickness on the planar portion is 1,152 µm, the film thickness on the corner portion is 460 µm, and the insulating film having a sufficient thickness can be formed on the corner portion.

In this manner, by performing the R processing on the corner portion of the bus bar body, it is possible to reduce the thickness of the insulating film on the planar portion, it is also possible to reduce the application amount for forming the insulating film, and it is possible to reduce a production cost.

In addition, from these test results, it can be seen that by setting the radius of curvature (R) in the R processing to 500 µm or more and forming the film thickness of the insulating film on the planar portion to about 1,250 µm, the film thickness of the insulating film on the corner portion can be set to 300 µm or more and the film thickness of the insulating film on the corner portion can be controlled to a preferred range.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-030456) filed on February 28, 2023, and the contents thereof are incorporated herein by reference.

### REFERENCE SIGNS LIST

1 bus bar
5 bus bar body
6a, 6b connection hole
7 corner portion
10 insulating film
100 power storage device
110 battery cell
111 electrode
120 battery case
R radius of curvature of corner portion

## Claims

1. A bus bar for use in a power storage device including a battery cell, the bus bar comprising:
a bus bar body containing a conductive material; and
an insulating film covering the bus bar body, wherein
a corner portion of the bus bar body is subjected to R processing.

2. The bus bar according to claim 1, wherein a radius of curvature (R) of the R processing at the corner portion is 500 µm or more.

3. The bus bar according to claim 2, wherein the insulating film contains a filler.

4. The bus bar according to claim 3, wherein the filler includes an inorganic compound.

5. The bus bar according to claim 4, wherein the inorganic compound includes a silicate compound.

6. The bus bar according to claim 5, wherein the silicate compound is at least one kind selected from a glass-based material, mica, kaolin, talc, clay, pyrophyllite, montmorillonite, bentonite, wollastonite, xonotlite, zeolite, diatomaceous earth, and halloysite.

7. The bus bar according to claim 6, wherein the glass-based material is at least one kind selected from a flaky glass, a glass particle, a glass fiber, and a glass bead.

8. The bus bar according to claim 6, wherein the silicate compound includes at least one of a glass-based material and mica, and the glass-based material is a flaky glass.

9. The bus bar according to any one of claims 3 to 8, wherein a content of the filler with respect to all components in the insulating film is 3 vol% to 70 vol%.

10. The bus bar according to any one of claims 1 to 8, wherein the insulating film has a minimum film thickness of 300 µm or more.

11. The bus bar according to any one of claims 1 to 8, wherein the insulating film contains a silicone-based material.

12. The bus bar according to any one of claims 1 to 8, wherein the insulating film contains a silicone resin and a thixotropic agent.

13. A method for producing a bus bar for use in a power storage device including a battery cell, the method comprising:
a step of performing R processing on a corner portion of a bus bar body containing a conductive material; and
a step of applying an insulating coating material to the bus bar body and then drying the insulating coating material to form an insulating film.

14. The method for producing a bus bar according to claim 13, wherein the insulating coating material is applied to the bus bar body using at least one coating method selected from spray coating, powder coating, and dip coating.

15. The method for producing a bus bar according to claim 13, wherein a radius of curvature (R) of R processing at the corner portion is 500 µm or more.

16. The method for producing a bus bar according to claim 15, wherein the insulating coating material contains a filler.

17. The method for producing a bus bar according to claim 16, wherein the filler includes an inorganic compound.

18. The method for producing a bus bar according to claim 17, wherein the inorganic compound includes a silicate compound.

19. The method for producing a bus bar according to claim 18, wherein the silicate compound is at least one kind selected from a glass-based material, mica, kaolin, talc, clay, pyrophyllite, montmorillonite, bentonite, wollastonite, xonotlite, zeolite, diatomaceous earth, and halloysite.

20. The method for producing a bus bar according to claim 19, wherein the glass-based material is at least one kind selected from a flaky glass, a glass particle, a glass fiber, and a glass bead.

21. The method for producing a bus bar according to claim 19, wherein the silicate compound includes at least one of a glass-based material and mica, and the glass-based material is a flaky glass.

22. The method for producing a bus bar according to any one of claims 16 to 21, wherein a content of the filler with respect to all solid components in the insulating coating material is 3 vol% to 70 vol%.

23. The method for producing a bus bar according to any one of claims 13 to 21, wherein the insulating coating material is applied to the bus bar body such that the insulating film after drying has a minimum film thickness of 300 µm or more.

24. The method for producing a bus bar according to any one of claims 13 to 21, wherein the insulating coating material contains a silicone-based material.

25. The method for producing a bus bar according to any one of claims 13 to 21, wherein the insulating coating material contains a silicone resin and a thixotropic agent.

26. A power storage device comprising:
a plurality of battery cells or battery modules connected to each other by the bus bar according to any one of claims 1 to 8.
